# EUROPÄISCHE PATENTSCHRIFT

(11) **EP 2 732 946 B1**
(45) Veröffentlichungstag und Bekanntmachung des Hinweises auf die Patenterteilung: **08.08.2018**
(21) Anmeldenummer: 13193436.6
(22) Anmeldetag: 19.11.2013
(51) Int. Cl.: B29B 15/12, B29C 70/20, B29K 309/08, B29K 101/12, B29K 105/10

(54) **Komposit, Bauteil hieraus sowie Verfahren zur Herstellung hierfür**
Composite, component therefrom and method for producing the same
Composite, composant fabriqué à partir de celui-ci et procédé de fabrication correspondant

(30) Priorität: 19.11.2012 DE 102012111097
(43) Veröffentlichungstag der Anmeldung: 21.05.2014
(73) Patentinhaber: DBW Holding GmbH, 37120 Bovenden (DE)
(72) Erfinder: Seifert, Meinolf, 33184 Altenbeken (DE); Geitner, Esther, 98724 Lauscha (DE)
(74) Vertreter: Kröncke, Rolf

(56) Entgegenhaltungen:
- EP-A1- 0 056 703
- EP-A2- 0 316 922
- WO-A1-2011/131664
- WO-A2-2011/163357
- US-A1- 2007 227 646
- "Boron-Free E-CR Glass Reinforcement Properties INTRODUCTION", , 1. April 2010 (2010-04-01), XP055099693, Gefunden im Internet: URL:http://www.ocvreinforcements.com/pdf/l ibrary/Advantex_ECR_glass_properties_ww_20 1004_web.pdf [gefunden am 2014-01-31]

## Beschreibung

Die vorliegende Erfindung betrifft in einem ersten Aspekt Komposite aus Glasfaserrovings und Thermoplast als Matrix. In einem weiteren Aspekt richtet sich die vorliegende Erfindung auf mindestens zweilagige Werkstoffe aus mindestens zwei Lagen Komposit sowie Bauteile mit erfindungsgemäßem Komposit. Schließlich richtet sich die Erfindung in einem weiteren Aspekt auf ein Verfahren zur Herstellung solcher erfindungsgemäßen Komposite.

### Stand der Technik

Komposite und Verbundwerkstoffe sind Werkstoffe aus zwei oder mehr verbundenen Materialien. Die Verbindung erfolgt durch Stoff- oder Formschluss oder eine Kombination von beiden. Eine Teilgruppe von Verbundwerkstoffen sind Faserverbundwerkstoffe, die im Allgemeinen aus zwei Hauptkomponenten, nämlich einer bettenden Matrix sowie verstärkenden Fasern bestehen. Durch gegenseitige Wechselwirkungen der beiden Komponenten erhält dieser Werkstoff höherwertige Eigenschaften als jede der beiden einzeln beteiligten Komponenten. Üblicherweise weist ein entsprechender Faserverbundwerkstoff dabei eine Faserrichtung der Fasern auf. In diese Faserrichtung eine vielfach größere Festigkeit als dasselbe Material in anderer Form. Dabei gilt der allgemeine Grundsatz, dass, je dünner die Faser ist, desto größer ihre Festigkeit. Faserverbundwerkstoffe zeichnen sich durch eine hohe spezifische Festigkeit aus, d.h. einem guten Verhältnis aus Festigkeit und Gewicht. Üblicherweise werden zur Erzielung einer ausreichenden Festigkeit in verschiedene Richtungen statt einzelner Fasern, Gewebe oder Gelege verwendet, die vor dem Kontakt mit der Matrix hergestellt werden.

Übliche Faserverbundwerkstoffe aus Kohlefaser oder Glasfaser werden daher aus Fasermatten oder Fasergeweben oder Gewirken mit einer entsprechenden Matrix hergestellt. Als Matrix können dabei Duromere mit ihren entsprechenden Untergruppen der Duroplaste, Elastomere und Thermoplaste verwendet werden.

Zur Herstellung entsprechender Komposite und Faserverbundwerkstoffe gibt es derzeit verschiedene Verfahren. Zur Laminatherstellung, bei denen Faserhalbzeuge mit unterschiedlichen Hauptfaserrichtungen übereinandergelegt werden, finden Handlegeverfahren, Pre-preg-Technologien oder Vakuuminfusion Anwendung. Dabei werden Faserhalbzeuge in Form von Geweben, Gewirken oder Fasermatten in eine Form eingelegt und anschließend mit der Matrix getränkt. In der Pre-preg-Technologie werden mit Matrixwerkstoff vorimprägnierte Fasermatten eingesetzt. Diese werden anschließend durch Erhitzen gehärtet.

Weiterhin gibt es das Faserspritzen, hier werden Endlosfasern mit einem Schneidwerk auf eine gewünschte Länge geschnitten und zusammen mit Harz und mit entsprechenden Vorrichtungen in die Form gebracht.

Als Faser-Matrix-Halbzeuge werden Halbzeuge aus Verstärkungsfasern, die mit einer Kunststoffmatrix getränkt sind, verstanden. Als Matrix werden dabei duroplastische und thermoplastische Kunststoffe eingesetzt. Verstärkungsfasern sind üblicherweise Glasfasern oder Kohlenstofffasern. Pre-pregs sind ihre bekanntesten Vertreter, dabei handelt es sich üblicherweise um ein Halbzeug aus Endlosfasern. Zur Herstellung sind dabei besondere Verfahren notwendig, da die thermoplastische Schmelze aufgrund ihrer hohen Viskosität eine Mikrotränkung erschwert. Üblicherweise werden die Endlosfasern dabei in Form von Matten, Geweben oder Gewirken eingesetzt. Plattenförmige thermoplastische Pre-pregs werden auch als Organobleche bezeichnet.

Als Glasfasern werden heutzutage E-Glas-Fasern eingesetzt. Diese werden entsprechend als Matten, Gelege oder Gewebe mit Duroplasten und Thermoplasten verwendet. Aus der DE 195 27 154 sind thermoplastisch verformbare Verbundwerkstoffe bekannt. Die DE 41 12 129 A1 beschreibt undirektionale Verbundwerkstoffe mit hoher Reißfestigkeit und Verfahren zu ihrer Herstellung.

Die EP 316 922 A2 beschreibt faserverstärkte Harzmaterialien und faserverstärkte Harzlaminate, die die Materialien als Basis enthalten. Die US 2007/0227646 A1 betrifft ein Verfahren zur Herstellung von faserverstärkten Harzzusammensetzungen.

Aufgabe der vorliegenden Erfindung ist die Bereitstellung von Kompositen, die gegenüber bekannten Kompositen einfach herstellbar und kostengünstig produzierbar sind. Vorteilhaft sind solche Komposite, die ein geringeres Flächengewicht bei gleichen oder besseren Festigkeitswerten gegenüber bekannten Kompositen und Verbundwerkstoffen aufzeigen.

### Beschreibung der Erfindung

Die oben genannten Ziele werden mit einem erfindungsgemäßen Komposit nach Anspruch 1 erreicht. Das erfindungsgemäße Komposit ist eines mit Glasfaserrovings und einem Thermoplasten als Matrix, wobei die Glasfasern des Rovings in eine Hauptrichtung verlaufen, dadurch gekennzeichnet, dass die Rovings im Komposit nicht gewebt, geflochten oder gestrickt vorliegen und der Roving mindestens nach dem Versetzen mit dem Thermoplast in Einzelfasern gespreizt wurde.

Vorliegend werden die Ausdrucke "Faser" und Filament" synonym verwendet.

Vorliegend wird unter dem Ausdruck "Komposit" ein einlagiges Element verstanden mit Glasfasern als Verstärkungsfaser und Thermoplast als Matrix.

Unter dem Ausdruck "Verbundwerkstoff" wird ein mindestens zweilagiger Werkstoff verstanden, wobei mindestens eine Lage ein Komposit ist.

Die Rovings liegen dabei derart vor, dass sie im Wesentlichen parallel im Komposit sind. Die Rovings werden dabei parallel zueinander geführt und der Thermoplast aufgebracht, um ein Vorprodukt zu erhalten. Üblicherweise wird der Roving dabei bei seiner Herstellung vorab mit einer Schlichte beschichtet, um entsprechende Festigkeit und Anbindung an die Matrix zu erreichen. Die Matrix wird mit den parallel geführten Rovings in Kontakt und mit geeigneten Mitteln, wie Walzen und Kalander, werden Roving und Matrix in die gewünschte Form gebracht. Der einzelne Roving wird dabei während der Beschichtung mit dem Thermoplast gespreizt. Gegebenenfalls kann eine Spreizung auch vorab schon erfolgen, um eine bessere Benetzung der Filamente und Fasern mit der Matrix zu erzielen. Es ist dabei bevorzugt, dass bei bzw. nach der Beschichtung mit dem Thermoplasten eine Endspreizung erzielt wird, um anschließend durch Härtung des Thermoplasten ein erfindungsgemäßes Komposit zu erhalten. Nach dem Herstellungsverfahren des Komposits liegen die den Roving ausbildenden Glasfasern vereinzelnd vor, wobei diese vereinzelten Glasfasern im Wesentlichen parallel in die Hauptfaserrichtung vorliegen.

Geeignete Glasfaserrovings sind dabei solche aus einer Glasfaserart oder aus verschiedenen Glasfaserarten gegebenenfalls in Verbindung mit anderen Fasern. Die Glasfaserrovings können dabei solche aus E-Glas sein. Bevorzugt sind die Glasfaserrovings aber aus ECR-Glas. Bevorzugte ECR-Gläser sind solche mit 1200, aber insbesondere 2400 und 4800 tex.

Die Verstärkungsfaser im Komposit, insbesondere eine ECR-Glasverstärkungsfaser in Form von Rovings liegt dabei in gestreckter Form vor. Es ist bevorzugt, dass exakt parallele Verstärkungsfasern eingesetzt werden.

Das erfindungsgemäße Komposit ist dabei bevorzugt eines mit einer bei der die Matrix in Form eines Thermoplast ausgewählt ist aus Polyolefin, Polyamid, Polylactat, Polymethylmethacrylat, Polycarbonat, Polyethylenterepthalat, Polystyrol, Polyetherketon, und Polyvinylchlorid. Bevorzugt werden Polyolefine, hier insbesondere Polyethylen und Polypropylen, sowie Polyamide eingesetzt.

Das erfindungsgemäße Komposit ist dabei eines, das eine Dicke von maximal 1 mm aufweist, bevorzugt ist es eines mit einer Dicke von bis zu 0,7 mm, insbesondere bis zu 0,5 mm Dicke, wie z. B. bis zu 0,3 mm dick ist. Die minimale Dicke sollte z. B. 0,25 mm betragen (z. B. bei einem Anteil der Glasfaser an Komposit von mindestens 50 Gew. %).

Aufgrund der Verwendung von nicht gewebten oder gewirkten Rovings und insbesondere auf Basis der Verwendung von ECR-Glasfasern mit 1200 tex, 2400 tex oder 4800 tex, ist es möglich, das Flächengewicht der Komposite zu verringern. In einer bevorzugten Ausführungsform ist daher das Flächengewicht des Komposits maximal 1000 g/m², bevorzugt maximal 700 g/m², wie maximal 500 g/m², z.B. maximal 300 g/m². Das minimale Foliengewicht sollte bei 200 g/m² liegen (z. B. bei einem Glasfaseranteil von höchstens 50 Gew. %).

Die erfindungsgemäßen Komposite zeichnen sich dabei darin aus, dass bei verringertem Flächengewicht und verringerter Dicke die mechanischen Eigenschaften, insbesondere Festigkeitswerte, nicht verschlechtert sind. So können die Zugfestigkeit, das Elastizitätsmodul und der Dehnungswert gegenüber herkömmlichen Produkten gleichgehalten werden, auch wenn das Flächengewicht um mindestens 20 %, wie bevorzugt um mindestens 25 %, gegenüber einem kommerziellen Produkt aus einer gewebten oder gelegten Glasfasermatte verringert ist. Gegenüber herkömmlichen Kompositen ist dabei möglich, die Dicke des Komposits deutlich zu verringern, z.B. um mindestens 30 %, wie um mindestens 50 %.

Die erfindungsgemäßen Komposite sind dabei erfindungsgemäß in Verbundwerkstoffen verarbeitet. Erfindungsgemäße Verbundwerkstoffe sind dabei solche aus mindestens zwei Lagen Komposit, wobei mindestens eine dieser Lagen ein erfindungsgemäßes Komposit ist.

Es ist bevorzugt, dass in dem erfindungsgemäßen Verbundwerkstoff die Faserorientierung der Fasern der Filamente der Rovings in ihrer Haupterstreckungsrichtung in den Lagen winkelversetzt vorliegen, insbesondere winkelversetzt um 45° und/oder 90°, um multidirektionale Gelegestrukturen im Verbundwerkstoff zu erhalten.

Es ist daher möglich, im Verbundwerkstoff einen skalierbaren Mehrlagenaufbau zu erreichen, wobei eine belastungsgerechte Faserorientierung im Verbundwerkstoff möglich ist. Das heißt, die belastungsgerechte Faserorientierung ist dadurch möglich, dass der Verbundwerkstoff, bei denen die Fasern der Filamente der Rovings in ihrer Haupterstreckungseinrichtung in verschiedene Lagen winkelversetzt sind, aufgebaut wird, um die gewünschten Belastungen aufnehmen zu können.

Insbesondere beim Einsatz von ECR-Glasfasern zeichnen sich die erfindungsgemäßen Komposite und Verbundwerkstoffe durch geringere Flächengewichte bei besseren Festigkeitswerten aus. Dadurch können Gewichtsreduzierungen gegenüber herkömmlichen Kompositen und Verbundwerkstoffen, die mit Matten oder Geweben als Verstärkungsfasern ausgebildet sind, erreicht werden.

Es ist bevorzugt, dass die Komposite und Verbundwerkstoffe in einem Bauteil bzw. als Bestandteil eines Bauteils vorliegen. In dem erfindungsgemäßen Bauteil liegt dabei mindestens eine Lage aus einem erfindungsgemäßen Komposit oder einem erfindungsgemäßen Verbundwerkstoff, wie einem Schichtverbundwerkstoff, vor. Bevorzugt bilden dabei das erfindungsgemäße Komposit, und/oder der erfindungsgemäße Verbundwerkstoff die Außenschicht.

Bevorzugt ist dabei das erfindungsgemäße Bauteil mit mindestens einer Außenschicht aus einem erfindungsgemäßen Komposit oder einer Außenschicht aus einem erfindungsgemäßen Verbundwerkstoff eines mit einer Stützstruktur, insbesondere einem Stützkern. Stützstruktur und Stützkern können mit üblichen Materialien in üblicher Art und Weise ausgebildet sein. So kann es sich bei diesem Bauteil z.B. um eine Sandwichplatte handeln, wobei bevorzugt der Stützkern dabei ein Wabenkern ist. Andere Ausführungsformen sind möglich.

Die erfindungsgemäßen Komposite z.B. in Form von Verbundwerkstoffen oder Bauteilen können in verschiedenen Bereichen verwendet werden. Ein Bereich ist z.B. der Fahrzeugbau. Es ist möglich, die erfindungsgemäßen Komposite, Verbundwerkstoffe oder Bauteile für LKW-Aufbauten einzusetzen, wie z.B. als Kofferaufbau bei Kühlfahrzeugen oder in Frachtfahrzeugen. Weiterhin können entsprechende Bauteile, Verbundwerkstoffe oder Komposite als Dachelemente, Körper in Seitenwänden, Frontelementen, Heckteilen oder Türen eingesetzt werden. Im Wohnmobil- oder Caravanbereich sind entsprechende Komposite, Verbundwerkstoffe oder Bauteile als Seitenwände oder im Innenausbaubereich verwendbar.

Andere Einsatzgebiete schließen den Schiffs- und Bootsbau ein. Hier können die erfindungsgemäßen Komposite, Verbundwerkstoffe oder Bauteile im Innenausbau eingesetzt werden. Weiterhin finden die erfindungsgemäßen Komposite, Verbundwerkstoffe oder Bauteile Anwendung in Batteriegehäusen oder als Träger für Elektroden. Auch im Baubereich wie z.B. für Türblätter oder im Fertigbaubereich können die entsprechenden Bauteile Komposite oder Verbundwerkstoffe eingesetzt werden. Weitere erfindungsgemäße Möglichkeiten schließen Gehäuse z.B. bei Windkraftanlagen aber auch Wärmespeicher oder Tanks im Industriebau ein.

Die Bauteile können aus mehreren Lagen des erfindungsgemäßen Komposits erzeugt werden, bei denen die Fasern die anliegenden Kräfte in Richtung der gelegten Fasern aufnehmen. Diese Bauteile können anschließend noch hinsichtlich Geometrievervollständigung mit Thermoplasten umspritzt werden. Die erfindungsgemäßen Komposite, Verbundwerkstoffe bzw. Bauteile sind also vielseitig einsetzbar.

In einem weiteren Aspekt richtet sich die vorliegende Anmeldung auf ein Verfahren zur Herstellung des erfindungsgemäßen Komposits. Das Verfahren weist die Schritte auf: Bereitstellen der mindenstens zwei Glasfaserrovings, wobei diese im Wesentlichen parallel vorliegen, Auftragen des Thermoplasten auf die Glasfaserrovings, bevorzugt mit Hilfe eines Extruders; Walzen der mit Thermoplast beschichteten Glasfaserrovings zum Verteilen des Thermoplasten und zum (End)Spreizen des Rovings in Einzelfilamente, um ein Vorprodukt zu erhalten; und Härten des gewalzten Vorprodukts zum Erhalt eines erfindungsgemäßen Komposits. Bei den Glasfaserrovings handelt es sich insbesondere um Endlosfaserrovings. In einer Ausführungsform kann der einzelne Glasfaserroving dabei bereits vor Zugabe des Thermoplastens gewalzt werden, um ein Spreizen des Rovings in Einzelfilamente/Einzelfasern zu erzielen. Der Spreizschritt nach Zugabe des Thermoplasten erlaubt dann ein Endspreizen hiervon, z.B. in die Einzelfasern.

Bei dem hergestellten Komposit handelt es sich besonders bevorzugt um ein Endloskomposit.

Das Verfahren zur Herstellung eines erfindungsgemäßen Verbundwerkstoffes umfasst die Herstellung des Komposits so wie oben ausgeführt. Zusätzlich wird dazu die mindestens eine weitere Schicht des Verbundwerkstoffes in Form von Platten auf das Vorprodukt oder auf bereits gehärtetes Komposit gelegt und anschließend das Vorprodukt bzw. der Komposit mit den aufgelegten Platten gehärtet. Dadurch ist es möglich, multidirektionale Strukturen z.B. als homogene multidirektionale Gelege zu erhalten. Bei der Herstellung des Faserverbundwerkstoffs kann dabei als Binder Matrixmaterial verwendet werden oder andere geeignete härtbare Binder.

Erfindungsgemäß ist es dabei möglich, die Rovings direkt als unidirektionale Filamentvorlagen durch entsprechendes Abwickeln der Filamentrovings von Spulen zu erzielen. Ein weiterer Arbeitsschritt zum Weben oder Wirken ist nicht notwendig.

Mit dem erfindungsgemäßen Verfahren ist die Drapierbarkeit, d.h. die sphärische Verformbarkeit sich an die Kontur einer dreidimensionalen Oberfläche anpassen zu können, einstellbar.

Schließlich wird eine Vorrichtung beschrieben zur Herstellung der erfindungsgemäßen Komposite. Die Vorrichtung umfasst dabei eine Einrichtung zum parallelen Legen von Glasfaserrovings. Die Glasfaserrovings werden dabei bevorzugt direkt von der Spule gelegt. Die gelegten Rovings werden gegebenenfalls mit Hilfe von Walzen oder Kalandern gespreizt. Anschließend wird das Matrix-Material - der Thermoplast - mit einer entsprechenden Einrichtung aufgetragen. Dieses erfolgt üblicherweise mit einem Extruder. Nach dem Extruder wird das Vorprodukt aus gespreiztem Roving und Matrix mit Hilfe von Walzen und Kalandern, z.B. mit Heißwalzen, geformt, der Roving weiter gespreizt und das Matrixmaterial gehärtet, um erfindungsgemäße Komposite mit gespreizten Einzelfasern zu erhalten.

Im Folgenden wird die Erfindung anhand von Beispielen näher erläutert ohne hierauf beschränkt zu sein.

### Beispiel 1

Als Vergleichsprodukt wird das Produkt Vetrolite 2.2 (Vetroresina LLC, USA) eingesetzt. Hierbei handelt es sich um einen Verbundwerkstoff mit einem Komposit aus PP und Glasfasermatte mit einem E-Glas.

Der erfindungsgemäße Verbundwerkstoff mit einem erfindungsgemäßen Komposit wurde wie folgt hergestellt:
Als Roving wurde ECR-Glas (2400 tex), das als Roving auf Spulen vorliegt, verwendet. Die Rovings wurden aus einem Spulengatter von den Spulen drehungsfrei, ohne große Spannung abgezogen und nebeneinander parallel abgelegt. Dabei werden möglichst die angestrebte Ausbreitung der Fasern und das gewünschte Flächengewicht an Fasern bereits eingestellt. Durch Umlenkungen an mehreren Walzen werden die Rovings parallel ausgerichtet und gespreizt. Im Heißkalander erfolgt die endgültige Spreizung der Filamente und gleichzeitig die Beschichtung und Ummantelung mit den Thermoplasten (z. B. mit Hilfe eines Extruders), z. B. mit Moplen EP 300M Lyondell Basell, Polymers (Schmelzindex 7,0 g/10 min bei 230°C(2.16 kg; Zugfestigkeit 21.5 MPa).

In der Tabelle 1 sind die Eigenschaften des erfindungsgemäßen Verbundwerkstoffes mit 2 Lagen und von Vetroresina dargestellt.

**Tabelle 1**

| | **erfindungsgemäßes Produkt** | **Vetroresina** |
|---|---|---|
| Dicke (mm) ISO 16012 | 1 | 2,2 |
| Flächengewicht (g/m²) ISO 16012 | 700 | 2700 |
| Zugfestigkeit (MPa) DIN EN ISO 527-4 | >200 | 58 |
| E-Modul (MPa) DIN EN ISO 527-4 | >10.000 | 5.300 |
| Dehnungswert (%) DIN EN ISO 527-4 | >2 | 1,3 |

Wie aus der Tabelle 1 deutlich wird, zeigt der erfindungsgemäße Verbundwerkstoff aus 2 Lagen im Vergleich zu dem Stand der Technik bei einer wesentlich geringeren Dicke und wesentlich geringerem Flächengewicht eine verbesserte Zugfestigkeit und E-Modul-Eigenschaften. Auch der Dehnungswert ist gegenüber dem Vergleich verbessert.

Es ist somit erfindungsgemäß möglich, Komposite, Verbundwerkstoffe, sowie Bauteile bereitzustellen, deren mechanische Eigenschaften mindestens gleichwertig sind gegenüber Stand der Technik-Produkten, wobei die Dicke und das Flächengewicht reduziert sind, so dass einerseits Kosten reduziert werden können und andererseits aber auch eine Gewichtsreduzierung und z.B. im Fahrzeugbereich eine Treibstoffeinsparung möglich ist.

### Beispiel 2

Wie im Beispiel 1 beschrieben, werden Komposite hergestellt, wobei Komposit 1 ohne nachträgliche Spreizung der Glasfasern nach der Thermoplastbeschichtung erhalten wurde, Komposit 2 wurde erfindungsgemäß einer nachträglichen weiteren Spreizung unterworfen (Dicke des Komposit: 0,28 mm; Flächengewicht: 350 g/m²).

**Tabelle 2**

| | **E-Modul** | **Zugfestigkeit** | **Dehnungswert** |
|---|---|---|---|
| Komposit 1 | 14645 MPa | 180 MPa | 2,64 % |
| Komposit 2 | 28041 MPa | 392 MPa | 1,51 % |

Es zeigt sich somit, dass die Spreizung nach Aufbringen des Thermoplast die mechanischen Eigenschaften deutlich verbessert.

### Beispiel 3

Die Weiterverarbeitung von erfindungsgemäßen Kompositen zu einer multidirektionalen Gelegestruktur erfolgt durch Auflegen der entsprechend vorgefertigten Platten im geforderten Legewinkel auf eine in Produktionsrichtung laufende (0°) Endlosbahn. Das multidirektionale Gelege wird wiederum mittels Heißkalanderwalzen zu einem homogenen Gelege verfestigt.

Auf Grund der gestreckten und gerichteten Glasfasern in den multidirektionalen Gelegeaufbauten kann für die Faserverbundanwendungen der Vorteil der Ausnutzung der faserspezifischen Eigenschaften der Hochleistungsfasern in die gewünschte Richtung erzielt werden.

## Patentansprüche

1. Komposit aus Glasfaser-Rovings und einem Thermoplasten als Matrix wobei die Glasfasern der Rovings in eine Hauptrichtung verlaufen, wobei die Rovings im Komposit nicht gewebt, geflochten oder gestrickt vorliegen und die Rovings mindestens nach dem Versetzen mit dem Thermoplast in Einzelglasfasern gespreizt wurden, **dadurch gekennzeichnet, dass** die den Roving ausbildenden Glasfasern vereinzelt von mindestens zwei Glasfaserrovings parallel verlaufend in dem Komposit vorliegen.

2. Komposit nach Anspruch 1, **dadurch gekennzeichnet, dass** die Rovings aus ECR-Glas, insbesondere einem ECR-Glas mit 2400 und 4800 TEX, sind.

3. Komposit nach einem der vorherigen Ansprüche, **dadurch gekennzeichnet, dass** der Thermoplast ausgewählt ist aus Polyolefin, insbesondere Polyethylen und Polypropylen, Polyamid, Polylactat, Polymethylmethacrylat, Polycarbonat, Polyethylenterephtalat, Polystyrol, Polyetherketon und Polyvinylchlorid, insbesondere aus Polyolefin oder Polyamid.

4. Komposit nach einem der vorherigen Ansprüche, **dadurch gekennzeichnet, dass** dieser maximal 1 mm, wie bis zu 0,7 mm, insbesondere bis zu 0,5 mm, wie bis zu 0,3 mm dick ist.

5. Komposit nach einem der vorherigen Ansprüche, **dadurch gekennzeichnet, dass** dieser ein Flächengewicht von maximal 1000 g/m², bevorzugt mindestens maximal 700 g/m², aufweist und/oder das minimale Flächengewicht mindestens 200 g/m², wie mindestens 300 g/m², beträgt.

6. Mindestens zweilagiger Werkstoff aus mindestens zwei Lagen Komposit, wobei mindestens eine dieser Lagen ein Komposit gemäß einem der Ansprüche 1 bis 5 ist.

7. Mindestens zweilagiger Werkstoff nach Anspruch 6, wobei die Fasern der Rovings in ihrer Haupterstreckungsrichtung in den Lagen winkelversetzt vorliegen, insbesondere winkelversetzt um 45° und/oder 90°.

8. Bauteil mit mindestens einer Lage aus einem Komposit nach einem der Ansprüche 1 bis 5 oder mit oder aus einem mindestens zweilagigen Werkstoff nach einem der Ansprüche 6 oder 7, wie einem Schichtverbundwerkstoff, insbesondere wobei das erfindungsgemäße Komposit oder der erfindungsgemäße mindestens zweilagige Werkstoff die Außenschicht ausbildet.

9. Bauteil nach Anspruch 8 mit mindestens einer Außenschicht aus einem Komposit nach einem der Ansprüche 1 bis 5 oder einer Außenschicht aus einem mindestens zweilagigen Werkstoff nach einem der Ansprüche 6 oder 7 und einer Stützstruktur, insbesondere einem Stützkern.

10. Bauteil nach einem der Ansprüche 8 oder 9 in Form einer Sandwichplatte insbesondere mit einem Wabenkern als Stützkern.

11. Verwendung eines Komposits nach einem der Ansprüche 1 bis 5 oder eines mindestens zweilagigen Werkstoffes nach einem der Ansprüche 6 oder 7 oder einem Bauteil nach einem der Ansprüche 8 bis 10 im Fahrzeugbereich.

12. Verfahren zur Herstellung eines Komposits nach einem der Ansprüche 1 bis 5 mit den Schritten:
- Bereitstellen von mindestens zwei Glasfaserrovings, wobei diese im Wesentlichen parallel vorliegen;
- Auftragen des Thermoplasten auf die Glasfaserrovings, bevorzugt mit Hilfe eines Extruders;
- Walzen der mit Thermoplast beschichteten Glasfaserrovings zum Verteilen des Thermoplasten und zum Spreizen der Rovings in Einzelfasern, um ein Vorprodukt zu erhalten;
- Härten des gewalzten Vorprodukts zum Erhalt eines Komposits nach einem der Ansprüche 1 bis 5.

13. Verfahren nach Anspruch 12, wobei der Glasfaserroving als Endlosfaserroving verwendet wird.

14. Verfahren nach Anspruch 13, **dadurch gekennzeichnet, dass** das hergestellte Komposit ein Endloskomposit ist.

15. Verfahren zur Herstellung eines mindestens zweilagigen Werkstoffes nach einem der Ansprüche 6 bis 7, **dadurch gekennzeichnet, dass** die mindestens eine weitere Schicht des Komposits in Form von Platten auf das Vorprodukt gelegt wird und anschließend das Vorprodukt mit den Platten gehärtet wird.

## Claims

1. Composite composed of glass fibre rovings and a thermoplastic as matrix, wherein the glass fibres of the rovings run in a main direction, wherein the rovings are not in woven, braided or knitted form and the rovings, at least after being admixed with the thermoplastic, have been spread into individual glass fibres, **characterized in that** the glass fibres that form the roving in individualized form from at least two glass fibre rovings run in parallel in the composite.

2. Composite according to Claim 1, **characterized in that** the rovings are composed of ECR glass, especially an ECR glass with 2400 and 4800 tex.

3. Composite according to any of the preceding claims, **characterized in that** the thermoplastic are selected from polyolefin, especially polyethylene and polypropylene, polyamide, polylactate, polymethylmethacrylate, polycarbonate, polyethylene terephthalate, polystyrene, polyetherketone and polyvinyl chloride, especially from polyolefin and polyamide.

4. Composite according to any of the preceding claims, **characterized in that** it has a maximum thickness of 1 mm, such as up to 0.7 mm, especially up to 0.5 mm, such as up to 0.3 mm.

5. Composite according to any of the preceding claims, **characterized in that** it has a basis weight of not more than 1000 g/m², preferably at least not more than 700 g/m², and/or the minimum basis weight is at least 200 g/m², such as at least 300 g/m².

6. At least dilaminar material composed of at least two layers of composite, wherein at least one of these two layers is a composite according to any of Claims 1 to 5.

7. At least dilaminar material according to Claim 6, wherein the fibres of the rovings are offset at an angle in the layers in their main direction of extension, especially offset at an angle of 45° and/or 90°.

8. Component having at least one layer of a composite according to any of Claims 1 to 5 or comprising or composed of at least one dilaminar material according to either of Claims 6 and 7, such as laminar composite material, especially wherein the composite of the invention or the at least dilaminar material of the invention forms the outer layer.

9. Component according to Claim 8 having at least one outer layer composed of a composite according to any of Claims 1 to 5 or an outer layer composed of an at least dilaminar material according to either of Claims 6 and 7 and a support structure, especially a support core.

10. Component according to either of Claims 8 and 9 in the form of a sandwich sheet, especially with a honeycomb as support core.

11. Use of a composite according to any of Claims 1 to 5 or of an at least dilaminar material as claimed in either of Claims 6 and 7 or a component as claimed in any of claims 8 to 10 in vehicle construction.

12. Process for producing a composite according to any of Claims 1 to 5, comprising the steps of:
- providing at least two glass fibre rovings, essentially in parallel form;
- applying the thermoplastic to the glass fibre rovings, preferably with the aid of an extruder;
- rolling the thermoplastic-coated glass fibre rovings to distribute the thermoplastic and to spread the rovings into individual fibres in order to obtain a precursor;
- hardening the rolled precursor to obtain a composite according to any of Claims 1 to 5.

13. Process according to Claim 12, wherein the glass fibre roving is used in the form of a continuous fibre roving.

14. Process according to Claim 13, wherein the composite produced is a continuous composite.

15. Process for producing an at least dilaminar material according to either of Claims 6 and 7, **characterized in that** the at least one further layer of the composite is placed onto the precursor in the form of sheets and then the precursor is hardened together with the sheets.

## Revendications

1. Composite constitué de substrats de verre textile en fibres de verre et d'un thermoplastique en tant que matrice, les fibres de verre des substrats de verre textile s'étendant dans une direction principale, les substrats de verre textile n'étant pas tissés, tressés ou tricotés et les substrats de verre textile ayant été écartés en fibres de verre individuelles au moins après le bouchage avec le thermoplastique, **caractérisé en ce que** les fibres de verre qui forment le substrat de verre textile s'étendent parallèlement dans le composite en ayant été isolées d'au moins deux substrats de verre textile.

2. Composite selon la revendication 1, **caractérisé en ce que** les substrats de verre textile sont en verre ECR, notamment un verre ECR avec 2400 et 4800 TEX.

3. Composite selon l'une des revendications précédentes, **caractérisé en ce que** le thermoplastique est choisi parmi le polyoléfine, notamment le polyéthylène et le polypropylène, le polyamide, l'acide polylactique, le polyméthacrylate de méthyle, le polycarbonate, le polyéthylène téréphtalate, le polystyrène, le polyéthercétone et le polychlorure de vinyle, notamment le polyoléfine ou le polyamide.

4. Composite selon l'une des revendications précédentes, **caractérisé en ce que** celui-ci possède une épaisseur maximale de 1 mm, par exemple au plus de 0,7 mm, notamment au plus de 0,5 mm, comme au plus de 0,3 mm.

5. Composite selon l'une des revendications précédentes, **caractérisé en ce que** celui-ci possède un grammage maximal 1000 g/m², de préférence au moins maximal de 700 g/m², et/ou le grammage minimal est de 200 g/m², par exemple d'au moins 300 g/m².

6. Matériau ayant au moins deux couches constitué d'au moins deux couches de composite, au moins l'une de ces couches étant un composite selon l'une des revendications 1 à 5.

7. Matériau ayant au moins deux couches selon la revendication 6, les fibres des substrats de verre textile étant présentes dans les couches avec un décalage angulaire dans la direction de leur extension principale, notamment un décalage angulaire de 45° et/ou de 90°.

8. Élément de construction comprenant au moins une couche constituée d'un composite selon l'une des revendications 1 à 5, ou comprenant ou constitué d'un matériau ayant au moins deux couches selon l'une des revendications 6 ou 7, comprenant un matériau aggloméré stratifié, le composite selon l'invention ou le matériau ayant au moins deux couches selon l'invention formant notamment la couche externe.

9. Élément de construction selon la revendication 8, comprenant au moins une couche externe constituée d'un composite selon l'une des revendications 1 à 5, ou une couche externe constituée d'un matériau ayant au moins deux couches selon l'une des revendications 6 ou 7 et une structure support, notamment une âme formant support.

10. Élément de construction selon l'une des revendications 8 ou 9 sous la forme d'un panneau sandwich, notamment pourvu d'une âme en nid d'abeilles en tant qu'âme formant support.

11. Utilisation d'un composite selon l'une des revendications 1 à 5 ou d'un matériau ayant au moins deux couches selon l'une des revendications 6 ou 7 ou un élément de construction selon l'une des revendications 8 à 10 dans le secteur des véhicules.

12. Procédé de fabrication d'un composite selon l'une des revendications 1 à 5, comprenant les étapes suivantes :
- fourniture d'au moins deux substrats de verre textile en fibres de verre, ceux-ci étant sensiblement parallèles ;
- application de thermoplastique sur les substrats de verre textile en fibres de verre, de préférence à l'aide d'une extrudeuse ;
- laminage des substrats de verre textile en fibres de verre revêtus de thermoplastique pour répartir le thermoplastique et pour écarter les substrats de verre textile en fibres de verre individuelles afin d'obtenir un produit semi-fini ;
- durcissement du produit semi-fini laminé afin d'obtenir un composite selon l'une des revendications 1 à 5.

13. Procédé selon la revendication 12, le substrat de verre textile en fibres de verre étant utilisé comme un substrat de verre textile à fibres en continu.

14. Procédé selon la revendication 13, **caractérisé en ce que** le composite fabriqué et un composite en continu.

15. Procédé de fabrication d'un matériau ayant au moins deux couches selon l'une des revendications 6 ou 7, **caractérisé en ce que** l'au moins une couche supplémentaire du composite est déposée sur le produit semi-fini sous la forme de panneaux et le produit semi-fini pourvu des panneaux est ensuite durci.
